# EUROPEAN PATENT APPLICATION

(11) **EP 4 692 862 A1**
(43) Date of publication of application: **11.02.2026**
(21) Application number: 25184073.2
(22) Date of filing: 19.06.2025
(51) Int. Cl.: G02B 1/14, G02B 5/30, G02F 1/1335

(54) **POLARIZER APPLIED FOR A VIEWING SIDE OF A DISPLAY**

(30) Priority: 06.08.2024 TW 113129416
(71) Applicant: BenQ Materials Corporation, Taoyuan City (TW)
(72) Inventor: Chuang, Kai-Chun, Taoyuan City (TW); Chung, Yu-Lun, Taoyuan City (TW); Yu, Kuo-Hsuan, Taoyuan City (TW)
(74) Representative: Murgitroyd & Company

(57) **Abstract**

A polarizer applied for a viewing side of a display is disclosed. The polarizer comprises a polarizing layer, and a polyester protective film disposed on a front side of the polarizing layer. The polyester protective film comprises a polyester substrate with an in-plane retardation not greater than 1200 nm and having an average refractive index (np), a first primer layer disposed on one side of the polyester substrate and having a first refractive index (n₁), and a second primer layer disposed on the other side of the polyester substrate and adjacent to the polarizing layer and having a second refractive index (n2), wherein the refractive indexes of the polyester protective substrate, the first primer layer and the second primer layer satisfy the relationships of nₚ>n₁>n₂ and (nₚ-n₁)/(nₚ-n₂)≤0.7 to reduce interference rainbow patterns.

## Description

### CROSS - REFERENCE TO RELATED APPLICATION

This application claims the benefit of Taiwanese patent application serial No. 113129416, filed on Aug. 6, 2024, the subject matter of which is incorporated herein by reference.

### BACKGROUND OF THE INVENTION

### Field of Invention

The present invention relates to a polarizer applied for a viewing side of a display to reduce the interference rainbow patterns occurred on the display.

### Description of Related Art

Due to the development trend of display devices, such as liquid crystal displays (LCDs), organic light-emitting diode (OLED) displays, micron light-emitting diode (micro-LED) displays, toward high brightness, thinness, flexibility and the high image quality, the structure of the functional optical films used in the display become complicated and the optical matching requirements between the functional optical films are more stringent.

At present, when providing polarizers with a better water vapor transmission resistance and mechanic strength, either the liner polarizers for LC displays or the circular polarizers for light-emitting diode displays, the protectability and the optical properties required by the outer protective film cannot be sacrificed. It has been proposed to use polyester film with crystalline feature to replace triacetyl cellulose (TAC) film as protective film for polarizer. However, the polyester film, such as polyethylene terephthalate (PET) film, comprises benzene-ring structure with high crystallinity and has birefringence after stretch manufacturing process. Therefore, when PET film is used as protective film for a display, the image quality of the display will be affected, such as occurrence of interference rainbow patterns. For reducing the occurrence of interference rainbow patterns, the polyester film commonly used is a polyethylene terephthalate film with an in-plane retardation (R0) of at least 3000 nm along with a high haze or high roughness coating layer to disrupt the light interference of the passing-through light, and preferably the polyethylene terephthalate film with an in-plane retardation (R0) of 8000 nm or more than 8000 nm to reduce the occurrence of interference rainbow patterns.

However, the polyethylene terephthalate film with a high in-plane retardation (R0) with a high haze or high roughness coating layer significantly affects the image quality and appearance of the display. Furthermore, for obtaining a birefringent film with very high in-plane retardation, the birefringent film can be a polyester film manufactured by a uniaxial or biaxial stretching process at a high stretching rate or a polyester film of high thickness (such as greater than 100 µm) to obtain the expected display quality. However, the birefringent polyester film manufactured by a high stretching rate has a reduced tensile strength and different heat shrinkage ratios at machine direction and transverse direction, which is adversely to be used as a protective film. When the birefringent polyester film is laminated with a polarizing layer which is also manufactured by a stretching process, the laminated polarizer should keep a uniform stress to avoid the unexpected uneven stress pattern or color stain. On the other, increasing in-plane retardation by increasing the thickness of the polyester film is a direct way but contrary to the current development trend to thinner and lighter devices. And, when the thicker protective film is applied to flexible or arc-shaped device, the thickness of the film will change the distribution of the bending stress to increase the difficulties of optical film lamination design.

Therefore, the present invention is to provide a polarizer applied for a viewing side of a display comprising a polyester protective film with a low in-plane retardation (R0), such as a polyethylene terephthalate film with R0 <1200 nm. The polyester protective film applied in front of the polarizer can provide interference rainbow patterns resistance without a high haze or a high roughness coating layer thereon.

### SUMMARY OF THE INVENTION

An aspect of the present invention is to provide a polarizer applied for a viewing side of a display, which comprises a polarizing layer and a polyester protective film disposed in front of the polarizing layer, wherein the polyester protective film comprises a polyester substrate with an in-plane retardation not greater than 1200 nm and an average refractive index nₚ, a first primer having a first refractive index (n1) disposed on one side of the polyester substrate, and a second primer having a second refractive index (n2) disposed on the other side of the polyester substrate and adjacent to the polarizing layer, wherein nₚ>n₁>n₂, and (nₚ-n₁)/(nₚ-n₂)≤0.7.

In the polarizer of an embodiment of the present invention, the birefringence (Δn) of the polyester substrate is between 0.003 and 0.015.

In the polarizer of another embodiment of the present invention, the difference of the first refractive index (n₁) of the first primer and the second refractive index (n₂) of the second primer of the polyester substrate satisfies the relationship: (n₁-n₂) greater than or equal to 0.05.

In the polarizer of another embodiment of the present invention, the first refractive index (n₁) of the first primer of the polyester substrate is between 1.56 and 1.65, and the second refractive index (n₂) of the second primer thereof is between 1.51 and 1.60.

In the polarizer of another embodiment of the present invention, the thickness of the polyester substrate is between 10 µm and 80 µm.

In the polarizer of another embodiment of the present invention, the thickness of the first primer and the second primer is respectively between 0.1 µm and 0.3 µm.

In the polarizer of another embodiment of the present invention, the polyester substrate is a uniaxial or biaxial stretched polyester film.

In the polarizer of another embodiment of the present invention, the polarizing layer can be iodine-type or dye-type stretched polarizing layer or coating-type polarizing layer.

In the polarizer of another embodiment of the present invention, the first primer of the protective film further comprises an antiglare layer thereon, and the antiglare layer has a total haze less than or equal to 30%.

In the polarizer of another embodiment of the present invention, the thickness of the antiglare layer is between 2 µm and 10 µm.

In the polarizer of another embodiment of the present invention, the polarizer further comprises an anti-reflective layer on the antiglare layer.

In the polarizer of another embodiment of the present invention, the thickness of the anti-reflective layer is between 0.1 µm and 0.3 µm.

The above and other aspects of the invention will become better understood with regard to the following detailed description of the preferred but nonlimiting embodiment(s). These and other aspects of the invention will become apparent from the following description of the presently preferred embodiments. The detailed description is merely illustrative of the invention and does not limit the scope of the invention, which is defined by the appended claims and equivalents thereof. As would be obvious to one skilled in the art, many variations and modifications of the invention may be affected without departing from the spirit and scope of the novel concepts of the disclosure.

### BRIEF DESCRIPTION OF THE INVENTION

Fig. 1 is a schematic diagram of an embodiment of the polarizer of the present invention;
Fig. 2 is a schematic diagram of another embodiment of the polarizer of the present invention;
Fig. 3 is a schematic diagram of still another embodiment of the polarizer of the present invention.

### DETAILED DESCRIPTION OF THE INVENTION

In the following detailed description, for purposes of explanation, numerous specific details are set forth to provide a thorough understanding of the disclosed embodiments. It will be apparent, however, that one or more embodiments may be practiced without these specific details.

It is apparent that departures from specific designs and methods described and shown will suggest themselves to those skilled in the art and may be used without departing from the spirit and scope of the invention. The present invention is not restricted to the particular constructions described and illustrated, but should be construed to cohere with all modifications that may fall within the scope of the appended claims.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

Hereinafter, the phrase "in front of the polarizing layer" refers to the side of the polarizing layer of the polarizer toward the display viewers, wherein the polarizer disposed at the viewer side of a display.

The disclosed polarizer for the viewing side of a display comprises a polarizing layer and a polyester protective film disposed in front of the polarizing layer to provide a satisfied water vapor transmission resistance and mechanic strength on the surface of the display. The polyester film used as a protective film in the disclosed polarizer provides satisfied light transmittance and reduced interface reflection and image light-intensity loss, and will not cause the interference rainbow patterns occurred at the interfaces of the both sides of the polyester protective film by the polarized light from the image light or external ambient light passing through the polarizing layer.

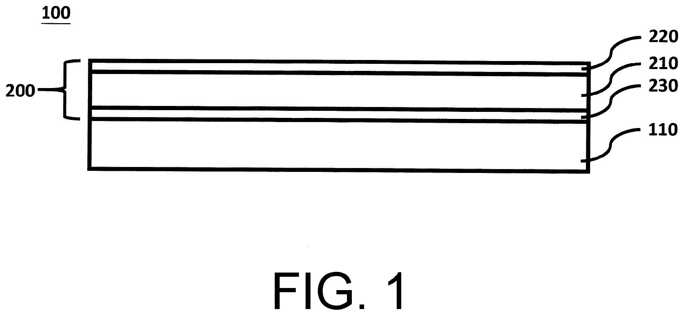

Referring to Fig. 1, an aspect of the present invention is to provide a polarizer 100 applied for a viewing side of a display, which comprises a polarizing layer 110 and a polyester protective film 200 disposed in front of the polarizing layer 110. The polyester protective film 200 comprises a polyester substrate 210 with an in-plane retardation not greater than 1200 nm and an average refractive index nₚ, a first primer 220 having a first refractive index (n₁) disposed on one side of the polyester substrate 210, and a second primer 230 having a second refractive index (n2) disposed on the other side of the polyester substrate 210and adjacent to the polarizing layer 110, wherein nₚ>n₁>n₂ and (nₚ-n₁)/(nₚ-n₂)≤0.7.

The polyester substrate 210 has an in-plane retardation of less than 1200 nm, an average refractive index (nₚ) of 1.60 to 1.70 and a light transmittance of at least 85% and preferably at least 88%. Furthermore, the polyester protective film 200 can be a polyester substrate 210 with different thicknesses for different applications, wherein the thickness of the polyester substrate 210 can be between 10 µm and 80 µm.

The first refractive index (n₁) of the first primer 220 of the polyester protective film 200 is less than the average refractive index (nₚ) of the polyester substrate 210 to obtain a lower surface reflectivity. In an embodiment of the invention, the first refractive index (n₁) of the first primer 220 is between 1.52 and 1.65 and preferably between 1.56 and 1.65.

Furthermore, the second refractive index (n₂) of the second primer 230 of the polyester protective film 200 is less than the average refractive index (nₚ) of the polyester substrate 210 to obtain a lower interface reflectivity between the second primer 230 and the polyester substrate 210. In addition, the second primer 230 is also used for adhering to the polarizing layer 110. Because the polarizing layer 110 is usually a stretched polyvinyl alcohol film and is adhered to a protective film by a polyvinyl alcohol adhesive, and the refractive indexes of the polyvinyl alcohol layer and the polyvinyl alcohol adhesive are both between 1.50 and 1.52. The second refractive index (n₂) of the second primer 230 is preferably close to the refractive indexes of the polyvinyl alcohol layer and the polyvinyl alcohol adhesive, that is, the second refractive index (n₂) of the second primer 230 is between 1.51 and 1.60 and preferably between 1.52 and 1.60 for matching the refractive indexes of the polyvinyl alcohol film and the polyvinyl alcohol adhesive to decrease the interface reflectivity between the second primer and the polarizing layer. The second refractive index (n₂) of the second primer 230 should be less than the first refractive index (n₁) of the first primer 220, that is nₚ>n₁>n₂, to make the ratio of the differences between the refractive index of the polyester substrate and the refractive index of the first and second primers 220, 230 meet the relationship: (nₚ-n₁)/(nₚ-n₂)≤S0.7, to reduce the interface reflectivity at the two sides of the polyester substrate 210 and the occurrence of the interference rainbow patterns.

The polarizing layer 110 can be an iodine-type or dye-type stretched polarizing layer or a coating-type polarizing layer. When the polarizing layer 110 is adhered to the polyester substrate 210 with an in-plane retardation not greater than 1200 nm to form a polarizer 100, the axis matching issue between the absorption axis of the polarizing layer 110 and the stretching axis of polyester substrate 210 or the stress distribution pattern caused by uneven anisotropic shrinkage stress in the very high in-plane retardation polyester can be eliminated.

It is known that the refractive index ofa polyester substrate is between 1.60 and 1.70, so the difference of refractive index at the interfaces between two sides of the polarizing layer and the air are high, and the light passing therethrough will produce high intensive coherent light to cause interference rainbow patterns because of the birefringence. Therefore, if the ratio of the differences between the refractive index of the polyester substrate 210 and the refractive indexes of the first and second primers 220, 230 does not meet the relationship: (nₚ-n₁)/(nₚ-n₂)≤0.7, which means that the difference (nₚ-n₁) between the refractive index of the polyester substrate 210and the refractive index of the first primer 220 is too high and will result in a high surface reflectivity of the polyester substrate 210, or which means that the difference (nₚ-n₂) between the refractive index of the polyester substrate 210 and the refractive index of the second primer 230 is too low and will result in a relative increase of the difference of the refractive index at the interface of the polarizing layer 110 and the polyester substrate 210, and a reduction of transmittance of the image light between the film layers, and cause the polyester substrate 210 with an in-plane retardation not greater than 1200 nm cannot effectively reduce the occurrence of the interference rainbow patterns and interferes the image light quality of the display. The disclosed polarizer 100 does not use a polyester protective film with a high in-plane retardation but still can provide a good interference rainbow patterns resistance without use of a surface treatment layer with a high haze or a high roughness and provide satisfied light transmittance, reduced interface reflection and image light-intensity loss. When the polyester substrate 210 is adhered to a polarizing layer 110 with a high extension ratio, the stress distribution pattern caused by uneven anisotropic shrinkage stress will not occur.

In a preferred embodiment of the disclosed polarizer 100, the first refractive index (n₁) of the first primer 220 and the second refractive index (n₂) of the second primer 230 of the polyester protective film 200 meet the relationship: (n₁-n₂) greater than or equal to 0.05, thereby the coherence of the light passing through the both sides of the polyester substrate 210 can be reduced, and the light with different wavelengths is less likely to produce interference rainbow patterns due to the constructive interference.

**In** the disclosed polarizer 100, the first primer 220 is a coating layer comprising acetalized polyvinyl alcohol, polyurethane, urethane, polyether resin, polyacrylic resin, isocyanate or combinations thereof, but not limited to. The coating layer can optionally be added with metal oxide particles or phenyl-containing compounds to increase the refractive index to the expected range. **In** an embodiment of the disclosed polarizer, the thickness of the first primer 220 and the second primer 230 is both in the range of 0.1 µm to 0.3 µm. The first primer 220 and the second primer 230 in this thickness range can modify the refractive index of the both sides of the polyester substrate 210, but does not significantly increase the thickness of the polyester protective film 200 to affect the stress distribution to the polarizer 100 formed in the afterward process.

The polyester substrate 210 of the disclosed polarizer 100 is a polyester substrate with an in-plane retardation less than 1200 nm. Because the polyester substrate 210 is not a substrate with a high in-plane retardation, the polyester substrate 210 is not manufactured by a stretching process with a high stretching ratio to increase the birefringence (Δn) of the orthogonal machine direction and transverse direction. The polyester substrate 210 suitably used in the present invention is a uniaxial stretched or a biaxial stretched polyester film with a low in-plane retardation, and the birefringence difference of which is between 0.003 and 0.015, which means that the polyester substrate 210 is a uniaxial stretched or a biaxial stretched polyester film with a low in-plane retardation manufactured by a low stretching ratio process. Because the polyester substrate 210 used in the present invention is manufactured by a stretching process with a low stretching ratio, the polyester substrate 210 has a preferable tensile strength and a more uniform thermal shrinkage ratio in machine direction and transverse direction. When the polyester substrate 210 is applied to a polarizer, whether the polarizing layer is a highly stretched polarizing layer or a coating polarizer layer without stretching, the stress distribution on the polarizer is more uniform and thus, and the polyester substrate 210 can provide more protection to the display devices and advantageously to the flexible display devices.

In the disclosed polarizer 200, the second primer 230 of the polyester protective film 200 can be a coating layer of an adhesion primer for enhancing the polarizing layer to be bonded to the polyvinyl alcohol adhesive layer and having a similar refractive index. The second primer can be a coating layer formed by, for example, acetalized polyvinyl alcohol, polyurethane, urethane, polyether resin, polyacrylic resin, isocyanate or combinations thereof.

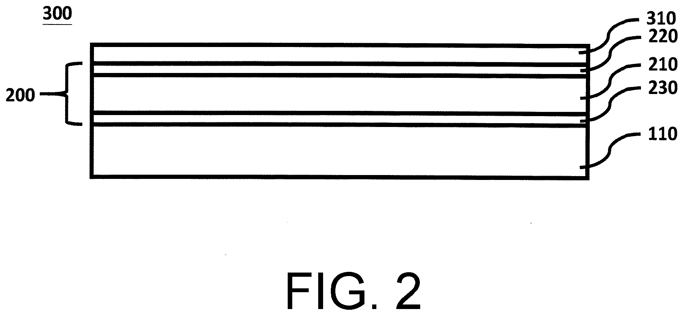

In another embodiment of the present invention, the first primer 220 of the polyester protective film 200 can further comprise an optical functional layer, such as, a hard coating layer, an antiglare layer, and/or anti-reflective layer disposed thereon. Referring to Fig. 2, the polarizer 300 of another embodiment of the present invention further comprises an antiglare layer 310 disposed on the first primer 220 of the polyester protective film 200. Because the disclosed polarizer 300 does not need to use an antiglare layer with high haze to reduce the light coherence occurred as the light passing through the surfaces of both sides of polyester substrate 210, therefore the antiglare layer 310 can be an antiglare layer with lower total haze. In a preferred embodiment of the present invention, the total haze of the antiglare layer 310 can be less than 30%, preferably less than or equal to 20%, even preferably less than or equal to 5%. Even if the antiglare layer 310 with a low haze, the polarizer 300 can still reduce occurrence of the interference rainbow patterns, thereby the decrease of the display image quality or the image blurry resulted from a high haze of antiglare layer can be avoided.

The antiglare layer 310 suitable for the present invention can be formed by an antiglare coating layer. The antiglare coating layer can be formed by coating a coating solution of acrylic binder resin mixed with micro-particles to form a concave and convex surface on the first primer to obtain an antiglare effect. The micro-particles used in the antiglare coating layer can be organic micro-particles or inorganic micro-particles or the combinations thereof.

The suitable organic micro-particles can be polymethyl methacrylate resin micro-particles, polystyrene resin micro-particles, styrene-methyl methacrylate copolymer micro-particles, polyethylene resin micro-particles, epoxy resin micro-particles, polysiloxane resin micro-particles, polyvinylidene fluoride resin micro-particles, polyvinyl fluoride resin micro-particles or the combination thereof in the particle size of 0.3 µm to 6 µm. The suitable inorganic micro-particles can be aluminosilicate, talc, mica, silica or combinations thereof in the particle size of 0.01 µm to 3 µm.

In the polarizer 300 of another embodiment of the present invention, the thickness of the antiglare layer 310 is between 2 µm and 10 µm, and preferably between 2 µm and 8 µm.

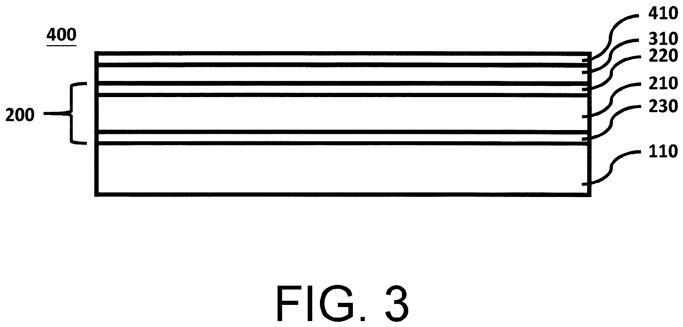

Referring to Fig. 3, the polarizer 400 of another embodiment of the present invention further comprises an anti-reflective layer 410 disposed on the surface of the antiglare layer 310 for decreasing the surface reflectivity and the reflection of strong light. The anti-reflective layer 410 can fill the surface of the antiglare layer 310 with surface haze to enhance the appearance gloss.

The anti-reflective layer 410 can be formed by an anti-reflective coating layer. The anti-reflective coating layer can be formed by coating a coating solution of acrylic binder resin mixed with silica nanoparticles with particle size of 0.05 µm to 0.3 µm on the antiglare layer 310 to obtain an anti-reflectivity effect. The thickness of the anti-reflective layer 410 is between 0.1 µm to 0.3 µm.

The present invention will be explained in further detail with reference to the examples. However, the present invention is not limited to these examples.

### Example

### Preparation Example 1 - Preparation of acrylic binder resin

42 parts by weight of polyurethane acrylate oligomer (the functionality of 6, molecular weight 2,600, viscosity 62,000 cps (at 25°C), available from Miwon Specialty Chemical, Korea), 4.5 parts by weight of pentaerythritol triacrylate (PETA), 12 parts by weight of dipentaerythritol hexaacrylate (DPHA), 3 parts by weight of isobornyl acrylate (IBOA), 4 parts by weight of initiator (Chemcure-481, available from Chembridge International Co., Ltd., Taiwan), 24.5 parts by weight of ethyl acetate (EAC) and 10 parts by weight of n-butyl acetate (nBAC) were mixed for 1 hour to form an acrylic binder resin.

### Preparation Example 2 - Preparation of antiglare coating solution I

220 parts by weight of the acrylic binder resin obtained from Preparation Example 1, 2.3 parts by weight of poly(methyl methacrylate (SSX-102, average particle size 2 µm, refractive index 1.49, available from Sekisui Plastics Co., Ltd., Japan), 15.1 parts by weight of chain-like silica nanoparticle dispersion sol with an average primary particle diameter of 9 nm to 15 nm and a chain length of 40 nm to 100 nm (MEK-ST-UP, solid content 20%, solvent: butanone, available from Nissan Chemical, Japan), 7.5 parts by weight of polyether-modified acrylate copolymer leveling agent (BYK-UV3535, solid content of 10%, solvent: ethyl acetate, available from BYK-Chemie, Germany), 3.1 parts by weight of silica nanoparticles dispersion (NanoBYK-3650, average particle size 20nm, solid content 31%, solvent: propylene glycol monomethyl ether acetate/propylene glycol monomethyl ether, commercially obtained from BYK, Germany), 64 parts by weight of ethyl acetate (EAC) and 118 parts by weight of n-butyl acetate (nBAC) were mixed and stirred to be uniformly dispersed to obtain an antiglare coating solution I.

### Preparation Example 3 - Preparation of antiglare coating solution II

220 parts by weight of acrylic binder resin obtained from Preparation Example 1, 16.2 parts by weight of methyl methacrylate-styrene-copolymer particles (XX-49IK, average particle size 5 µm, refractive index 1.545, available from Sekisui Plastics Co., Ltd., Japan), 4.2 parts by weight of methyl methacrylate-styrene-copolymer particles (XX-50IK, average particle size 3.5 µm, refractive index 1.555, available from Sekisui Plastics Co., Ltd., Japan), 6.0 parts by weight of polyether-modified polydimethylsiloxane leveling agent (BYK-333, solid content 10%, solvent: n-butyl acetate, commercially obtained from BYK, Germany), 16.4 parts by weight of silica nanoparticles dispersion (NanoBYK-3650, average particle size 20nm, solid content 31%, solvent: propylene glycol monomethyl ether acetate/propylene glycol monomethyl ether, commercially obtained from BYK, Germany), 41.2 parts by weight of ethyl acetate (EAC), 82.4 parts by weight of n-propyl acetate (nPAC) and 41.2 parts by weight of propylene glycol methyl ether acetate (PGMEA), were mixed and stirred to be uniformly dispersed to obtain an antiglare coating solution II.

### Preparation Example 4 Preparation of anti-reflective layer solution

25.4 parts by weight of fluorine-containing acrylate-modified polysiloxane resin (X-12-2430C, available from Shin-Etsu Chemical Co., Ltd., Japan), 1.6 parts by weight of photoinitiator (KIP-160, available from IGM Resin, Netherlands), 103.5 parts by weight of a perfluoropolyether containing (meth)acryl-modified organosilicone (X-71-1203E, solid content of 20%, solvent: methyl ethyl ketone, available from Shin-Etsu Chemical Co., Ltd., Japan), 211.5 parts by weight of hollow silica nanoparticle dispersion (Thrulya 4320, solid content 20%, average primary particle size 60 nm, solvent: methyl isobutyl ketone, JGC Catalysts and Chemicals Ltd., Japan), 1772 parts by weight of ethyl acetate (EAC) and 886 parts by weight of propylene glycol methyl ether acetate (PGMEA) were mixed and stirred for 10 minutes to obtain an anti-reflective layer solution.

### Preparation Example 5 Preparation of polyethylene terephthalate substrate

Polyethylene terephthalate resin particles with a melting point of 250°C to 260°C were heated to a molten state at 280°C and extruded by an extruder (DNT-EXT01, manufactured by JSW, Japan) and cooled to room temperature to from a uniform, non-crystalline oriented polyethylene terephthalate film. The polyethylene terephthalate film was stretched longitudinally at 100°C 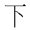 by a dry stretching machine (MA-08, manufactured by Hsin Yin Machinery Works, Taiwan) with a stretching ratio of 3.0 to enhance the crystalline orientation and light transmittance and then stretched in transverse direction with a stretching ratio of 3.0 to obtain a biaxial stretched polyethylene terephthalate film with a light transmittance of more than 90%, average refractive index of 1.66, in-plane retardation (R0) of 271 nm, thickness of 76µm. The birefringence difference (Δn) of polyethylene terephthalate film was 0.004 by dividing the in-plane retardation by the thickness.

### Example 1

The polyethylene terephthalate film of Preparation Example 5 was taken as a polyester substrate. A photo-curable acrylic resin with a refractive index of 1.61(n₁) (FL219, available from Everwide Chemical Co. Taiwan) was coated and cured on one side of the polyethylene terephthalate film as the first primer, and a photo-curable acrylic resin with a refractive index of 1.51 (n₂) (660G-40L, available from Eternal Materials Co. Ltd, Taiwan) was coated and cured on the other side of the polyethylene terephthalate film as the second primer to make a PET protective film.

The refractive indexes of the primers of the PET protective film were determined by adhering a black acrylic plate to one side of the protective film and measuring by HITACHI U-4150 spectrometer in a wavelength range of 380 nm to 780 nm. The average diffuse and specular reflectance of SCI (Specular Component Included) mode and the average diffuse reflectance of SCE (Specular Component Excluded) mode of the surfaces of both sides of PET protective film were measured and calculated by a spectral reflectance calculator (Filmetrics) with inputting the refractive index of PET polyester substrate and the thickness of each layer to calculating the refractive indexes of the first primer and second primer of the PET protective film. The results were shown in Table 1.

The obtained PET protective film with primers on both sides was adhered to the exposed polarizing layer of the commercial polarizer (RTT00015TH, available from BenQ Materials Corp. Taiwan), the surface protective film of which was removed, with the second primer side by an optical clear adhesive to obtain a polarizer.

The obtained polarizer was conducted an interference rainbow patterns evaluation. The obtained polarizer replaced the front-side polarizer of a liquid crystal display (Acer 27" Agile-Splendor IPS XV272K) and was evaluated the occurrence of the interference rainbow patterns on the display at viewing angle of 60 degrees. If there was no identifiable interference rainbow patterns, the evaluation was " excellent"(○); if there was an identifiable interference rainbow patterns, the evaluation was "poor" (X). The result was shown in Table 1.

### Example 2

A 50 µm PET film with an in-plane retardation of 407 nm, a birefringence of 0.008 and an average refractive index of 1.66 and coated with a first primer with a refractive index of 1.61 and a second primer with a refractive index of 1.56 (EBQ-410, available from Mitsubishi Chemical Group, Japan) was used as protective film.

The obtained PET protective film with primers on both sides was adhered to the exposed polarizing layer of the commercial polarizer (RTT00015TH, available from BenQ Materials Corp. Taiwan), the surface protective film of which was removed, with the second primer side by an optical clear adhesive to obtain a polarizer.

The obtained polarizer was evaluated the occurrence of interference rainbow patterns by the process as used in Example 1. The result was shown in Table 1.

### Example 3

A 50 µm PET film with an in-plane retardation of 456 nm, a birefringence of 0.009, and an average refractive index of 1.66 and coated with a first primer with a refractive index of 1.64 and a second primer with a refractive index of 1.56 (EBQ-409, available from Mitsubishi Chemical Group, Japan) was used as protective film.

The obtained PET protective film with primers on both sides was adhered to the exposed polarizing layer of the commercial polarizer (RTT00015TH, available from BenQ Materials Corp. Taiwan), the surface protective film of which was removed, with the second primer side by an optical clear adhesive to obtain a polarizer.

The obtained polarizer was evaluated the occurrence of interference rainbow patterns by the process as used in Example 1. The result was shown in Table 1.

### Example 4

A 66 µm PET film with an in-plane retardation of 713 nm, a birefringence of 0.011, and an average refractive index of 1.66 and coated with a first primer with a refractive index of 1.61 and a second primer with a refractive index of 1.54 (QBN-0017, available from Mitsubishi Chemical Group, Japan) was used as protective film.

The obtained PET protective film with primers on both sides was adhered to the exposed polarizing layer of the commercial polarizer (RTT00015TH, available from BenQ Materials Corp. Taiwan), the surface protective film of which was removed, with the second primer side by an optical clear adhesive to obtain a polarizer.

The obtained polarizer was evaluated the occurrence of interference rainbow patterns by the process as used in Example 1. The result was shown in Table 1.

### Example 5

A 75 µm PET film with an in-plane retardation of 1080 nm, a birefringence of 0.014 and an average refractive index of 1.66 and coated with a first primer with a refractive index of 1.65 and a second primer with a refractive index of 1.52 (O700E, available from Mitsubishi Chemical Group, Japan) was used as protective film.

The obtained PET protective film with primers on both sides was adhered to the exposed polarizing layer of the commercial polarizer (RTT00015TH, available from BenQ Materials Corp. Taiwan), the surface protective film of which was removed, with the second primer side by an optical clear adhesive to obtain a polarizer.

The obtained polarizer was evaluated the occurrence of interference rainbow patterns by the process as used in Example 1. The result was shown in Table 1.

**Table 1**

| | Example 1 | Example 2 | Example 3 | Example 4 | Example 5 |
|---|---|---|---|---|---|
| Thickness of polyester substrate (µm) | 76 | 50 | 50 | 66 | 75 |
| Birefringence of polyester substrate | 0.004 | 0.008 | 0.009 | 0.011 | 0.014 |
| In-plane retardation of polyester substrate (R0, nm) | 271 | 407 | 456 | 713 | 1080 |
| Refractive index of polyester substrate (nₚ) | 1.66 | 1.66 | 1.66 | 1.66 | 1.66 |
| first refractive index (n₁) | 1.61 | 1.61 | 1.64 | 1.61 | 1.65 |
| second refractive index (n₂) | 1.51 | 1.56 | 1.56 | 1.54 | 1.52 |
| (nₚ-n₁) / (nₚ-n₂) | 0.33 | 0.5 | 0.20 | 0.42 | 0.07 |
| (n₁-n₂) | 0.10 | 0.05 | 0.08 | 0.07 | 0.13 |
| Interference rainbow patterns evaluation at viewing angle of 60° | ○ | ○ | ○ | ○ | ○ |

### Example 6

The PET protective film obtained from Example 1 was further coated with an antiglare solution I prepared in Preparation Example 2 on the first primer, and dried and cured by a UV lamp with a radiation dose of 80 mJ/cm² under nitrogen atmosphere thereafter for forming an antiglare layer on the first primer to obtain an antiglare PET protective film. The antiglare protective film was adhered to an exposed polarizing layer of a commercial polarizer (RTT00015TH, available from BenQ Materials Corp. Taiwan), the surface protective film of which was removed, with the second primer side by an optical clear adhesive to obtain an antiglare polarizer.

The obtained antiglare polarizer was conducted an interference rainbow patterns evaluation in accordance with the process in Example 1. The thickness and the haze of the antiglare layer were determined in accordance with the measurements described hereinafter. The evaluation and the results of measurement were shown in Table 2.

Thickness measurement: The thickness was determined by Inductive Digital Comparators (Extramess 2001,manufactured by Mahr Inc., Germany) in accordance with the method of JIS K5600-1-7:2014 to measure the thickness of the antiglare layer.

Haze measurement: The haze was measured according to the test method of JIS K7136 by the NDH-2000 Haze Meter (manufactured by Nippon Denshoku industries, Japan).

### Example 7

The PET protective film of Example 2 was used to prepare an antiglare polarizer in accordance with the process of Example 6. The obtained antiglare polarizer was conducted an interference rainbow patterns evaluation in accordance with the process in Example 1. The thickness and the haze of the antiglare layer were determined in accordance with the measurements of Example 6. The evaluation and the results of measurement were shown in Table 2.

### Example 8

The PET protective film of Example 3 was used to prepare an antiglare polarizer in accordance with the process of Example 6. The obtained antiglare polarizer was conducted a interference rainbow patterns evaluation in accordance with the process in Example 1. The thickness and the haze of the antiglare layer were determined in accordance with the measurements of Example 6. The evaluation and the results of measurement were shown in Table 2.

### Example 9

The PET protective film of Example 4 was used to prepare an antiglare polarizer in accordance with the process of Example 6. The obtained antiglare polarizer was conducted a interference rainbow patterns evaluation in accordance with the process in Example 1. The thickness and the haze of the antiglare layer were determined in accordance with the measurements of Example 6. The evaluation and the results of measurement were shown in Table 2.

### Example 10

The PET protective film obtained from Example 5 was further coated with an antiglare solution II prepared in Preparation Example 3 on the first primer, and dried and cured by a UV lamp with a radiation dose of 80 mJ/cm² under nitrogen atmosphere thereafter for forming an antiglare layer to obtain an antiglare PET protective film. The antiglare protective film was adhered to an exposed polarizing layer of a commercial polarizer (RTT00015TH, available from BenQ Materials Corp. Taiwan), the surface protective film of which was removed, with the second primer side by an optical clear adhesive to obtain an antiglare polarizer.

The obtained antiglare polarizer was conducted an interference rainbow patterns evaluation in accordance with the process in Example 1. The thickness and the haze of the antiglare layer were determined in accordance with the measurements of Example 6. The evaluation and the results of measurement were shown in Table 2.

### Example 11

An antiglare protective film was prepared in accordance with Example 6. The anti-reflective coating solution prepared in Preparation Example 4 was coated on the antiglare layer of the antiglare protective film of Example 6, and dried and cured by a UV lamp with a radiation dose of 350 mJ/cm² under nitrogen atmosphere thereafter to form a thickness of 0.13 µm anti-reflective layer on the antiglare layer to obtain an anti-reflective antiglare protective film. The anti-reflective antiglare protective film was adhered to an exposed polarizing layer of a commercial polarizer (RTT00015TH, available from BenQ Materials Corp. Taiwan), the surface protective film of which was removed, with the second primer side by an optical clear adhesive to obtain anti-reflective antiglare polarizer.

The anti-reflective antiglare was conducted an interference rainbow patterns evaluation in accordance with the process in Example 1. The thickness and the haze of the antiglare layer were determined in accordance with the measurements of Example 6. The evaluation and the results of measurement were shown in Table 2.

**Table 2**

| | Example 6 | Example 7 | Example 8 | Example 9 | Example 10 | Example 11 |
|---|---|---|---|---|---|---|
| Total haze (%) | 2.38 | 1.34 | 1.32 | 2.17 | 29.02 | 2.27 |
| Thickness of antiglare layer (µm) | 6.8 | 7.0 | 6.2 | 5.6 | 7.8 | 6.2 |
| Interference rainbow patterns evaluation at viewing angle of 60° | ○ | ○ | ○ | ○ | ○ | ○ |

### Comparative Example 1

The polyethylene terephthalate film manufactured in Preparation Example 5 was taken as a polyester substrate and coated with a photo-curable acrylic resin with a refractive index of 1.51 (660G-40L, available from Eternal Materials Co. Ltd, Taiwan) on both sides as primers to form a PET protective film. The refractive indexes of the primers of the PET protective film were determined in accordance with the measurement described in Example 1. The results were shown in Table 3.

The antiglare solution I prepared in Preparation Example 2 was coated on one of the primers of the obtained PET protective film of the Comparative Example 1, and dried and cured by a UV lamp with a radiation dose of 80 mJ/cm² under nitrogen atmosphere thereafter to form an antiglare layer on the PET film to obtain an antiglare protective film. The antiglare protective film was adhered to an exposed polarizing layer of a commercial polarizer (RTT00015TH, available from BenQ Materials Corp. Taiwan), the surface protective film of which was removed, with the side opposite to the antiglare layer by an optical clear adhesive to obtain an antiglare polarizer.

The obtained antiglare polarizer was conducted an interference rainbow patterns evaluation in accordance with the process in Example 1. The thickness and the haze of the antiglare layer were determined in accordance with the measurements of Example 6. The evaluation and the results of measurement were shown in Table 3.

### Comparative Example 2

A 52 µm PET film with an in-plane retardation of 974 nm, a birefringence of 0.019, and an average refractive index of 1.66 and coated with a first primer with a refractive index of 1.56 and a second primer with a refractive index of 1.55 (QBN-0017, available from Mitsubishi Chemical Group, Japan) was used as a PET protective film.

The antiglare solution I prepared in Preparation Example 2 was coated on the first primer of the PET protective film of the Comparative Example 2, and dried and cured by a UV lamp with a radiation dose of 80 mJ/cm² under nitrogen atmosphere thereafter to form an antiglare layer on the PET protective film to obtain an antiglare PET protective film. The antiglare protective film was adhered to an exposed polarizing layer of a commercial polarizer (RTT00015TH, available from BenQ Materials Corp. Taiwan), the surface protective film of which was removed, with the second primer side by an optical clear adhesive to obtain an antiglare polarizer. The obtained antiglare polarizer was conducted an interference rainbow patterns evaluation in accordance with the process in Example 1. The thickness and the haze of the antiglare layer were determined in accordance with the measurements of Example 6. The evaluation and the results of measurement were shown in Table 3.

### Comparative Example 3

A 75 µm PET film with an in-plane retardation of 2384 nm, a birefringence of 0.032, and an average refractive index of 1.66 and coated with a first primer with a refractive index of 1.64 and a second primer with a refractive index of 1.59 (QBN-0009, available from Mitsubishi Chemical Group, Japan) was used as a PET protective film.

The antiglare solution I prepared in Preparation Example 2 was coated on the first primer of the PET protective film of the Comparative Example 3, and dried and cured by a UV lamp with a radiation dose of 80 mJ/cm² under nitrogen atmosphere thereafter to form an antiglare layer on the PET protective film to obtain an antiglare PET protective film. The antiglare protective film was adhered to an exposed polarizing layer of a commercial polarizer (RTT00015TH, available from BenQ Materials Corp. Taiwan), the surface protective film of which was removed, with the second primer side by an optical clear adhesive to obtain an antiglare polarizer. The obtained antiglare polarizer was conducted an interference rainbow patterns evaluation in accordance with the process in Example 1. The thickness and the haze of the antiglare layer were determined in accordance with the measurements of Example 6. The evaluation and the results of measurement were shown in Table 3.

### Comparative Example 4

A 75 µm PET film with an in-plane retardation 2490 nm, a birefringence of 0.033, an average refractive index of 1.66, and coated with a first primer with a refractive index of 1.61 and a second primer with a refractive index of 1.59 (QBN-0012, available from Mitsubishi Chemical Group, Japan) was used as a PET protective film.

The antiglare solution I prepared in Preparation Example 2 was coated on the first primer of the PET protective film of the Comparative Example 4, and dried and cured by a UV lamp with a radiation dose of 80 mJ/cm² under nitrogen atmosphere thereafter to form an antiglare layer on the PET protective film to obtain an antiglare PET protective film. The antiglare protective film was adhered to an exposed polarizing layer of a commercial polarizer (RTT00015TH, available from BenQ Materials Corp. Taiwan), the surface protective film of which was removed, with the second primer side by an optical clear adhesive to obtain an antiglare polarizer. The obtained antiglare polarizer was conducted an interference rainbow patterns evaluation in accordance with the process in Example 1. The thickness and the haze of the antiglare layer were determined in accordance with the measurements of Example 6. The evaluation and the results of measurement were shown in Table 3.

**Table 3**

| | Comparative Example 1 | Comparative Example 2 | Comparative Example 3 | Comparative Example 4 |
|---|---|---|---|---|
| Thickness of polyester substrate (µm) | 76 | 52 | 75 | 75 |
| Birefringence of polyester substrate | 0.004 | 0.019 | 0.032 | 0.033 |
| In-plane retardation of polyester substrate (R0, nm) | 271 | 974 | 2384 | 2490 |
| Refractive index of polyester substrate (nₚ) | 1.66 | 1.66 | 1.66 | 1.66 |
| First refractive index (n₁) | 1.51 | 1.56 | 1.64 | 1.61 |
| Second refractive index (n₂) | 1.51 | 1.55 | 1.59 | 1.59 |
| (nₚ-n₁) / (nₚ-n₂) | 1.0 | 0.91 | 0.29 | 0.71 |
| (n₁-n₂) | 0 | 0.01 | 0.05 | 0.02 |
| Total haze (%) | 1.45 | 1.36 | 2.62 | 2.38 |
| Antiglare layer thickness (µm) | 5.6 | 6.5 | 6.2 | 7.4 |
| Interference rainbow patterns evaluation at viewing angle of 60° | X | X | X | X |

As the test results shown in Tables 1 to 3, the polyester substrate with an in-plane retardation ≤1200 used in the polarizer for viewing side of a display can reduce occurrence of the interference rainbow patterns by making the average refractive index nₚ of the polyester substrate, the first refractive index (n₁) of the first primer and the second refractive index (n₂) of the second primer satisfy the relationship: nₚ>n₁>n₂ and (nₚ-n₁)/(nₚ-n₂) ≤0.7. When the polyester protective film of the polarizer for the viewing side of a display was coated with an antiglare layer and/or anti-reflective layer, even the total haze of the antiglare layer was ≤30%, or even was ≤5%, no interference rainbow patterns was observed. The light interference was disrupted at both sides of the polyester substrate without using a high haze layer or high roughness layer. Therefore, a polyester substrate with a high in-plane retardation (≥8000 nm) is not required for the polarizer at viewing side of a display to reduce interference rainbow patterns.

Although particular embodiments have been shown and described, it should be understood that the above discussion is not intended to limit the present invention to these embodiments. Persons skilled in the art will understand that various changes and modifications may be made without departing from the scope of the present invention as literally and equivalently covered by the following claims.

## Claims

1. A polarizer applied for a viewing side of a display comprising:
a polarizing layer; and
a polyester protective film disposed in front of the polarizing layer, wherein the polyester protective film comprises a polyester substrate with an in-plane retardation not greater than 1200 nm and an average refractive index nₚ, a first primer having a first refractive index (n1) disposed on one side of the polyester substrate, and a second primer having a second refractive index (n2) disposed on the other side of the polyester substrate and adjacent to the polarizing layer, wherein nₚ>n₁>n₂, and (nₚ-n₁)/(nₚ-n₂)≤0.7.

2. The polarizer applied for a viewing side of a display as claimed in Claim 1, wherein a birefringence of the polyester substrate is between 0.003 and 0.015.

3. The polarizer applied for a viewing side of a display as claimed in Claim 1, wherein a difference of the first refractive index (n₁) of the first primer and the second refractive index (n₂) of the second primer of the polyester substrate satisfies the relationship: (n₁-n₂) ≥0.05.

4. The polarizer applied for a viewing side of a display as claimed in Claim 1, wherein first refractive index (n₁) of the first primer of the polyester substrate is between 1.56 and 1.65, and the second refractive index (n₂) of the second primer thereof is between 1.51 and 1.60.

5. The polarizer applied for a viewing side of a display as claimed in Claim 1, wherein a thickness of the polyester substrate is between 10 µm and 80 µm.

6. The polarizer applied for a viewing side of a display as claimed in Claim 1, wherein a thickness of the first primer and the second primer is respectively between 0.1 µm and 0.3 µm.

7. The polarizer applied for a viewing side of a display as claimed in Claim 1, wherein the polyester substrate is a uniaxial or biaxial stretched polyester film.

8. The polarizer applied for a viewing side of a display as claimed in Claim 1, wherein the polarizing layer is an iodine-type or dye-type stretched polarizing layer or a coating-type polarizing layer.

9. The polarizer applied for a viewing side of a display as claimed in Claim 1, wherein the first primer of the protective film further comprises an antiglare layer formed thereon, and the antiglare layer has a total haze less than or equal to 30%.

10. The polarizer applied for a viewing side of a display as claimed in Claim 9, wherein a thickness of the antiglare layer is between 2 µm and 10 µm.

11. The polarizer applied for a viewing side of a display as claimed in Claim 9, further comprising an anti-reflective layer formed on the antiglare layer.

12. The polarizer applied for a viewing side of a display as claimed in Claim 11, wherein a thickness of the anti-reflective layer is between 0.1 µm and 0.3 µm.
